# DEMANDE DE BREVET EUROPEEN

(11) **EP 4 260 690 A1**
(43) Date de publication de la demande: **18.10.2023**
(21) Numéro de dépôt: 23167961.4
(22) Date de dépôt: 14.04.2023
(51) Int. Cl.: A01K 1/06, A01K 1/08

(54) **BALANCIER POUR BARRIERE DE TYPE CORNADIS**

(30) Priorité: 14.04.2022 FR 2203459
(71) Demandeur: Agritubel, 86200 Loudun (FR)
(72) Inventeur: DUBOUIX, Philippe, 86200 LOUDUN (FR)
(74) Mandataire: Derambure Conseil

(57) **Abrégé**

Balancier (20) adapté pour une barrière (10) de type cornadis, le balancier (20) comprenant un bras tubulaire (21) définissant un axe d'extension (B), le bras tubulaire (21) étant destiné à pivoter autour d'un premier axe transversal (Y1) par rapport à une embase (15) fixe ; et un organe de rappel adapté pour assurer un rappel du bras tubulaire (21) dans une première position (O) autour du premier axe transversal (Y1), caractérisé en ce que l'organe de rappel est disposé à l'intérieur du bras tubulaire (21).

## Description

### Domaine technique

La présente description se rapporte à un balancier adapté pour une barrière de type cornadis. La présente description se rapporte également à un ensemble pour barrière de type cornadis comportant un tel balancier, et à une barrière de type cornadis comportant un tel ensemble.

### Technique antérieure

Les barrières de type cornadis sont utilisées pour gérer l'alimentation d'animaux et aussi pour immobiliser un animal afin d'assurer certaines interventions, notamment des soins vétérinaires.

Une barrière de type cornadis comprend généralement un longeron supérieur, un longeron inférieur et une pluralité de montants verticaux s'étendant chacun entre le longeron supérieur et le longeron inférieur de sorte à définir une pluralité de cadres. Chaque cadre est donc délimité verticalement par le longeron supérieur et le longeron inférieur et longitudinalement par deux montants verticaux adjacents.

La direction longitudinale s'entend de la direction dans laquelle le longeron supérieur et le longeron inférieur s'étendent. La direction verticale correspond à la direction du champ de pesanteur terrestre. La direction verticale est perpendiculaire à la direction longitudinale. La direction transversale correspond enfin à une direction perpendiculaire à la direction longitudinale et à la direction verticale. En outre, les qualificatifs de position absolue, tels que les termes « haut », « bas », etc., ou de position relative, tels que les termes « dessus », « dessous », « supérieur », « inférieur », etc., et les qualificatifs d'orientation, tels que les termes « vertical » et « horizontal » font référence à la direction verticale telle que définie.

Chaque cadre est équipé d'un balancier pour la contention d'un animal. Le balancier est mobile depuis une position d'ouverture permettant le passage de la tête de l'animal. Le balancier peut être pivoté dans une position de fermeture délimitant un passage restreint permettant soit de refuser l'accès à un animal, soit d'entraver un animal par l'encolure. Le balancier peut encore être pivoté dans une position de dégagement permettant à l'animal d'accéder à une auge pour s'alimenter. Des moyens sont classiquement prévus pour verrouiller le balancier dans une ou plusieurs de ces positions ou encore dans une position intermédiaire.

Ces barrières comportent en outre des moyens adaptés pour assurer le retour automatique et le maintien du balancier dans la position d'ouverture. Ces moyens évitent une intervention manuelle pour ramener le balancier dans sa position d'ouverture. Ainsi, une fois l'animal libéré, le balancier retourne automatiquement vers la position d'ouverture pour être de nouveau prêt à l'emploi.

Néanmoins, les moyens connus pour assurer le retour du balancier dans la position d'ouverture sont généralement montés entre un montant vertical et le balancier de manière apparente. Dès lors, de tels moyens constituent un risque de blessure pour l'animal et/ou l'opérateur humain. Par ailleurs, ces moyens ne sont pas protégés et sont donc susceptibles d'être endommagés.

De plus, ces moyens sont généralement réalisés en élastomère. De tels matériaux ne sont pas entièrement satisfaisants en ce que leurs propriétés mécaniques, d'une part, sont sensibles aux conditions extérieures, telles que la température ou les radiations UV, et d'autre part, ne sont pas résistantes au phénomène de vieillissement.

### Résumé

La présente divulgation vient améliorer la situation.

Selon un premier aspect, il est proposé un balancier adapté pour une barrière de type cornadis, le balancier comprenant :
- un bras tubulaire définissant un axe d'extension, le bras tubulaire étant destiné à pivoter autour d'un premier axe transversal par rapport à une embase fixe ;
- un organe de rappel adapté pour assurer un rappel du bras tubulaire dans une première position autour du premier axe transversal, caractérisé en ce que l'organe de rappel est disposé à l'intérieur du bras tubulaire.

Ainsi, l'organe de rappel est protégé du milieu extérieur. Cela permet également d'éviter, voire d'empêcher, un blocage de l'organe de rappel par un corps étranger. Aussi, la durée de vie d'un tel organe de rappel est améliorée. Par ailleurs, l'accès à l'organe de rappel est limité, améliorant ainsi la sécurité pour l'utilisateur et/ou l'animal.

L'organe de rappel peut être intégralement (ou entièrement) disposé à l'intérieur du bras tubulaire. Autrement dit, aucune partie de l'organe de rappel ne s'étend à l'extérieur du bras tubulaire.

L'axe d'extension du bras tubulaire peut être perpendiculaire au premier axe transversal. Le balancier peut notamment pivoter entre une position d'ouverture permettant le passage de la tête d'un animal dans une partie supérieure du cadre et une position de dégagement permettant à l'animal d'accéder à une auge pour s'alimenter et/ou de retirer sa tête par une partie inférieure du cadre. La première position autour du premier axe transversal peut être la position d'ouverture, la position de dégagement ou une position intermédiaire entre la position d'ouverture et la position de dégagement.

Le balancier peut comprendre un arbre s'étendant suivant le premier axe transversal et sur lequel est monté pivotant le bras tubulaire, l'arbre étant destiné à être fixé rigidement à l'embase. Un tel arbre constitue une solution fiable et économique pour guider le bras tubulaire en rotation autour du premier axe transversal par rapport à l'embase.

Le bras tubulaire peut présenter un premier trou et un second trou disposés en vis-à-vis l'un de l'autre dans la direction transversale, l'arbre s'étendant transversalement au travers du premier trou et du second trou. L'arbre peut comprendre une première portion de guidage cylindrique de révolution et une seconde portion de guidage cylindrique de révolution. La première portion de guidage et la seconde portion de guidage peuvent être reçues respectivement, en tout ou partie, dans le premier trou et le second trou à travers le bras tubulaire. La section circulaire de la première portion de guidage et la section circulaire de la seconde portion de guidage assurent ainsi la rotation du bras tubulaire sur l'arbre autour du premier axe transversal.

L'organe de rappel peut comprendre un ressort spiral enroulé autour du premier axe transversal, le ressort spiral présentant une première portion d'extrémité qui est disposée, en tout ou partie, en appui sur une face interne du bras tubulaire à distance du premier axe transversal et une seconde portion d'extrémité qui est montée sur l'arbre solidaire en rotation autour du premier axe transversal. Un tel ressort permet un allègement du balancier. Notamment, un tel ressort permet d'éviter l'agencement d'une masse faisant office de contre-balancier pour ramener le balancier dans la première position.

La seconde portion d'extrémité du ressort spiral peut entourer une portion centrale de l'arbre. La seconde portion d'extrémité du ressort spiral et la portion centrale de l'arbre peuvent être associées par complémentarité de forme afin d'assurer un blocage en rotation autour du premier axe transversal entre la seconde portion d'extrémité du ressort spiral et la portion centrale de l'arbre. Le bras tubulaire peut comporter une ouverture à au moins l'une de ses extrémités, l'ouverture étant configurée pour insérer l'organe de rappel à l'intérieur du bras tubulaire. Au niveau de l'articulation du bras tubulaire autour de l'arbre, hormis le premier trou et second trou pour le passage de l'arbre, le bras tubulaire peut être dépourvu de toute autre ouverture, notamment pour le passage de l'organe de rappel, améliorant ainsi la protection de l'organe de rappel du milieu extérieur.

La portion centrale de l'arbre peut présenter une section de forme carrée, de préférence ayant des coins chanfreinés. Une section de forme carré permet un blocage en rotation autour du premier axe transversal de la seconde portion d'extrémité du ressort spiral par rapport à la portion centrale de l'arbre. Les chanfreins permettent une meilleure coopération entre l'arbre et la seconde portion d'extrémité du ressort spiral et limitent ainsi l'usure du ressort spiral. La portion centrale de l'arbre peut être disposée à l'intérieur du bras tubulaire.

Lorsque le bras tubulaire est dans la première position autour du premier axe transversal, le ressort spiral peut présenter un minimum de tension (i.e. une tension minimale). On assure ainsi un retour automatique du bras du balancier vers la première position autour du premier axe transversal lorsque celui-ci n'est pas dans la première position autour du premier axe transversal et qu'aucun effort n'est appliqué au bras du balancier. Lorsque le bras tubulaire est dans la première position autour du premier axe transversal, le ressort spiral peut présenter une pré-tension, i.e. une tension non nulle. Cela permet un meilleur rappel du bras tubulaire dans la première position autour de l'axe transversal.

La première portion d'extrémité du ressort spiral peut s'étendre généralement de manière rectiligne. Cela permet un effet de bras de levier plus important entre la première portion d'extrémité du ressort spiral et la face interne du bras tubulaire afin d'optimiser l'action exercée par le bras tubulaire sur le ressort spiral.

Le balancier peut comprendre un mécanisme d'arrêt adapté pour limiter un déplacement de l'organe de rappel à l'intérieur du bras tubulaire, au moins dans la direction de l'axe d'extension du bras tubulaire. Le mécanisme d'arrêt permet de maintenir l'organe de rappel à l'intérieur du bras tubulaire, notamment lors de l'assemblage ou du transport du balancier.

Le mécanisme d'arrêt peut comporter :
- un premier palier fixe par rapport au bras tubulaire, le premier palier comprenant un fût tubulaire s'étendant suivant le premier axe transversal à l'intérieur du bras tubulaire,
- une cage disposée à l'intérieur du bras tubulaire dans laquelle le ressort spiral est, en partie, reçu de manière flottante, la cage comportant un premier relief coopérant avec le fût du premier palier afin de bloquer un déplacement de la cage à l'intérieur du bras tubulaire dans un premier sens suivant l'axe d'extension du bras tubulaire.

Le ressort spiral peut alors être maintenu à l'intérieur du bras tubulaire d'extrémité avant l'insertion de l'arbre au travers du bras tubulaire. De plus, le ressort spiral peut être maintenu à l'intérieur du bras tubulaire avec la seconde portion d'extrémité du ressort spiral centrée autour du premier axe transversal pour permettre d'y insérer l'arbre.

Il est entendu par « flottante » qu'un déplacement limité du ressort spiral dans la cage est permis. Le premier sens suivant l'axe d'extension du bras tubulaire peut être dirigé vers une extrémité inférieure du bras tubulaire. Le fût du premier palier peut présenter une forme cylindrique de révolution autour du premier axe transversal. Le premier relief de la cage peut présenter une forme en arc de cercle autour du premier axe transversal. Le premier relief de la cage peut coopérer avec une face externe du fût du premier palier. La première portion d'extrémité du ressort spiral peut s'étendre à l'extérieur de la cage.

Le mécanisme d'arrêt peut comprendre un second palier fixe par rapport au bras tubulaire, le second palier comprenant un fût tubulaire s'étendant suivant le premier axe transversal à l'intérieur du bras tubulaire, la cage comportant un second relief coopérant avec le fût du second palier afin de bloquer un déplacement de la cage à l'intérieur du bras tubulaire dans, au moins, un second sens suivant l'axe d'extension du bras tubulaire.

Le ressort spiral est donc complètement encadré dans le bras tubulaire selon la direction d'extension du bras tubulaire et son déplacement suivant la direction d'extension du bras tubulaire est limité à un jeu. En outre, le ressort est maintenu dans le bras tubulaire dans une configuration permettant l'assemblage direct du balancier sur une barrière de type cornadis, i.e. sans qu'il ne soit nécessaire de réaliser des opérations supplémentaires de repositionnement du ressort spiral à l'intérieur du bras tubulaire. Par ailleurs, le balancier peut être transporté ou manipulé sans risque de déplacer le ressort spiral à l'intérieur du bras tubulaire ou de perdre le ressort spiral. Il n'est toutefois pas exclu qu'il peut exister un jeu entre l'organe de rappel et l'un des fûts ou entre l'organe de rappel et chaque fût. Le second sens suivant l'axe d'extension du bras tubulaire peut être dirigé vers une extrémité supérieure du bras tubulaire. Le second relief de la cage peut coopérer avec le fût du second palier afin de bloquer un déplacement de la cage à l'intérieur du bras tubulaire dans le premier sens et dans le second sens suivant l'axe d'extension du bras tubulaire.

Le fût du second palier peut présenter une forme cylindrique de révolution autour du premier axe transversal. Le second relief de la cage peut présenter une forme circulaire autour du premier axe transversal. Le second relief de la cage peut coopérer avec une face externe du fût du second palier.

La cage peut être adaptée pour recevoir le ressort spiral selon un sens unique d'enroulement autour du premier axe transversal dans lequel le ressort spiral exerce un effort de rappel sur le bras tubulaire pour pivoter celui-ci dans un sens de rotation autour du premier axe transversal vers la première position autour du premier axe transversal. Cela permet d'éviter qu'un utilisateur dispose le ressort spiral dans une configuration dans laquelle le ressort spiral exerce une action tendant à pivoter le bras tubulaire dans un sens de rotation autour du premier axe transversal opposé à la première position.

La cage peut être interposée, dans la direction transversale, entre le fût du premier palier et le fût du second palier afin de limiter un déplacement de la cage dans la direction transversale.

Le premier palier et le second palier peuvent être fixés l'un à l'autre.

Le fût du premier palier et le fût du second palier peuvent s'étendre transversalement au travers respectivement du premier trou et du second trou à travers le bras tubulaire de sorte à s'étendre en partie à l'extérieur du bras tubulaire.

Le premier palier et le second palier peuvent chacun comprendre une collerette faisant saillie d'une partie du fût respectif qui est située à l'extérieur du bras tubulaire, le bras tubulaire étant serré, dans la direction transversale, entre la collerette du premier palier et la collerette du second palier. Le premier palier et le second palier peuvent chacun comprendre une patte d'accrochage. La patte d'accrochage de chacun du premier palier et du second palier peut être solidaire de la collerette respective. La patte d'accrochage de chacun du premier palier et du second palier peut être agencée à l'extérieur du bras tubulaire. La patte d'accrochage du premier palier et la patte d'accrochage du second palier peuvent être en vis-à-vis l'une de l'autre dans la direction transversale. La patte d'accrochage du premier palier peut être fixée à la patte d'accrochage du second palier, notamment par vissage.

La patte d'accrochage du premier palier peut être en appui, dans la direction transversale, sur la patte d'accrochage du second palier. La patte d'accrochage du premier palier et la patte d'accrochage du second palier peuvent comprendre chacune un bossage. La patte d'accrochage du premier palier et la patte d'accrochage du second palier peut être en appui l'une sur l'autre, dans la direction transversale, au niveau de leur bossage respectif. Cela permet d'appliquer la collerette de chacun des paliers dans la direction transversale sur le bras tubulaire de sorte que le bras tubulaire soit serré transversalement entre la collerette de chacun des paliers.

La collerette du premier palier et la collerette du second palier peuvent chacune présenter une face d'appui en appui sur une face externe du bras tubulaire, la face d'appui de chaque collerette définissant une portion de cylindre de révolution. Ainsi, la face d'appui de chaque collerette présente une forme adaptée pour épouser la face externe du bras tubulaire. Cela permet une meilleure solidarisation des paliers sur le bras tubulaire.

Le fût du premier palier et le fût du second palier peuvent recouvrir respectivement la première portion de guidage et la seconde portion de guidage de l'arbre de sorte que le fût tubulaire du premier palier, respectivement du second palier, soit interposé entre l'un des trous à travers le bras tubulaire et la première portion de guidage, respectivement la seconde portion de guidage. Cela permet de limiter, voire d'éviter, une ovalisation ou une déformation du premier trou et du second trou à travers le bras tubulaire.

Le diamètre du fût du premier palier peut être différent du diamètre du fût du second palier. Cela permet d'éviter qu'un utilisateur intervertisse le premier palier et le second palier lors de l'assemblage du balancier.

L'organe de rappel peut être réalisé en matériau un métallique. Un organe de rappel en métal présente l'avantage d'avoir des propriétés mécaniques qui sont moins altérées par, d'une part, les conditions extérieures telles que la température ou les rayonnements ultraviolets, et d'autre part, le phénomène de vieillissement, notamment en comparaison à un matériau plastique, tel que le caoutchouc par exemple.

Il est également proposé un ensemble pour barrière de type cornadis, l'ensemble comprenant :
- un balancier tel que décrit ci-avant ;
- une embase destinée à être fixée à, ou formée par, un élément fixe d'une barrière de type cornadis, l'embase comprenant un premier flasque et un second flasque espacés l'un de l'autre dans la direction transversale, l'arbre étant relié au premier flasque et au second flasque ;
et dans lequel le bras tubulaire est disposé, dans la direction transversale, entre le premier flasque et le second flasque.

Le fait que le bras tubulaire du balancier soit disposé entre le premier flasque et le second flasque de l'embase permet de limiter, voire d'empêcher, un déplacement du bras tubulaire dans la direction transversale. Chaque flasque peut s'étendre perpendiculairement au premier axe transversal. Le premier flasque et le second flasque peuvent comporter respectivement un premier trou et un second trou centré sur le premier axe transversal, l'arbre s'étendant au travers du trou de chaque flasque. Le diamètre du premier trou à travers le premier flasque peut être supérieur au diamètre du second trou à travers le second flasque. Le diamètre de la première portion de guidage de l'arbre peut être supérieur au diamètre du trou à travers le second flasque. On assure ainsi un sens unique d'insertion de l'arbre à travers le bras tubulaire, le premier flasque et le second flasque.

L'arbre peut être fixe en rotation autour du premier axe transversal par rapport à l'embase par complémentarité de formes entre une portion de verrouillage de l'arbre et l'embase. La portion de verrouillage de l'arbre peut être reçue dans le premier trou à travers le premier flasque. La portion de verrouillage peut présenter une section adaptée pour coopérer avec une face interne du premier trou à travers le premier flasque pour solidariser en rotation l'arbre par rapport au premier flasque autour du premier axe transversal. La portion de verrouillage de l'arbre peut présenter une section ayant un profil anti-rotation, par exemple une section carrée, polygonale, ovale ou encore une forme comportant au moins un méplat.

L'arbre peut comprendre une tête au niveau d'une première extrémité dans la direction transversale, la tête présentant une surface d'appui qui est en appui, dans la direction transversale, avec une face externe du premier flasque. La face externe du premier flasque peut être opposée au second flasque dans la direction transversale. Lors de l'assemblage du balancier, la mise en appui de la tête de l'arbre sur la face externe du premier flasque assure le bon positionnement de l'arbre selon la direction transversale.

La tête de l'arbre peut présenter un profil externe anti-rotation. Cela permet de mettre en prise la tête de l'arbre avec un outil adapté pour maintenir l'arbre en rotation autour du premier axe transversal et/ou avec un outil adapté pour entrainer l'arbre en rotation autour du premier axe transversal afin d'engendrer une pré-tension dans le ressort lors de l'assemblage de l'ensemble, permettant ainsi un meilleur rappel du balancier dans la première position autour du premier axe transversal. La pré-tension peut être appliquée au ressort spiral avec l'arbre disposé de sorte que la portion de verrouillage de l'arbre ne soit pas engagée avec la face interne du premier trou à travers le premier flasque de l'embase.

L'arbre peut comprendre une portion filetée au niveau d'une seconde extrémité dans la direction transversale, la portion filetée s'étendant d'un côté du second flasque qui est opposé au premier flasque dans la direction transversale. L'ensemble peut comprendre en outre un écrou vissé sur la portion filetée de l'arbre pour être serré contre une face externe du second flasque. La face externe du second flasque peut être opposée au premier flasque dans la direction transversale.

La portion filetée de l'arbre peut s'étendre transversalement depuis la seconde extrémité de l'arbre jusqu'à une partie de l'arbre coïncidant avec la face externe du second flasque. Cela permet d'éviter, voire d'empêcher, un serrage trop important de l'écrou pouvant déformer les flasques.

L'arbre peut comprendre un épaulement en appui, dans la direction transversale, contre une face interne du second flasque. La face interne du second flasque peut être en regard du premier flasque dans la direction transversale. Cela permet un maintien de l'écartement entre le premier flasque et le second flasque dans la direction transversale lors du serrage de l'écrou. La collerette du premier palier, respectivement du second palier, peut être interposée entre le bras tubulaire et le premier flasque, respectivement le second flasque. La collerette du premier palier permet de maintenir un espacement entre le bras tubulaire et le premier flasque de l'embase. De même, la collerette du second palier permet de maintenir un espacement entre le bras tubulaire et le second flasque de l'embase. Cela permet de limiter, voire d'empêcher, que le bras tubulaire frappe contre l'un et/ou l'autre des flasques. Le bruit émis par l'ensemble lors de son utilisation est ainsi réduit.

Le premier palier et/ou le second palier peuvent être chacun réalisés en un matériau plastique. Cela permet de diminuer le bruit produit lors de la rotation du bras tubulaire et des paliers par rapport aux flasques de l'embase. Aussi, cela permet d'éviter encore mieux le phénomène d'ovalisation du premier trou et du second trou à travers le bras tubulaire.

Il est également proposé une barrière de type cornadis comprenant :
- un longeron supérieur et un longeron inférieur s'étendant chacun selon une direction longitudinale ;
- un premier montant vertical et un second montant vertical chacun reliés au longeron inférieur et au longeron supérieur de sorte à définir un cadre,
- un ensemble pour barrière cornadis tel que décrit ci-avant,
et dans laquelle le premier flasque et le second flasque de l'embase sont fixés au cadre.

La direction transversale peut être perpendiculaire à la direction longitudinale. En d'autres termes, le premier axe transversal peut être normal à un plan de la barrière, i.e. un plan contenant chacun des axes longitudinaux selon lesquels s'étendent le longeron supérieur et le longeron inférieur.

Le premier flasque et le second flasque peuvent être solidaires d'une barre coudée qui est fixée au cadre. La barre coudée peut s'étendre à l'intérieur du cadre. La barre coudée peut être fixée au longeron supérieur et au longeron inférieur. Alternativement, la barre coudée peut être fixée au premier montant vertical et à l'un parmi le longeron supérieur et le longeron inférieur.

Selon un deuxième aspect, indépendant du premier aspect, dans lequel la fonction de rappel décrite ci-dessus peut être omise, il est proposé un balancier adapté pour une barrière de type cornadis, le balancier comprenant :
- un arbre s'étendant suivant un premier axe transversal et destiné à être fixé rigidement à une embase,
- un bras tubulaire définissant un axe d'extension, le bras tubulaire étant monté pivotant sur l'arbre autour du premier axe transversal, le bras tubulaire présentant un premier trou et un second trou disposés en vis-à-vis l'un de l'autre selon le premier axe transversal, l'arbre comprenant une première portion de guidage et une seconde portion de guidage qui sont reçues respectivement dans le premier trou et le second trou du bras tubulaire de manière à guider le bras tubulaire en rotation autour du premier axe transversal,
- un premier palier et un second palier fixes par rapport au bras tubulaire, le premier palier et le second palier comprenant chacun un fût tubulaire s'étendant suivant le premier axe transversal, le fût du premier palier étant interposé entre la première portion du guidage de l'arbre et une face interne du premier trou à travers le bras tubulaire et le fût du second palier étant interposé entre la seconde portion du guidage de l'arbre et une face interne du second trou à travers le bras tubulaire.

Un tel agencement permet d'éviter un contact direct entre la face interne de chaque trou à travers le bras tubulaire et l'arbre. Cela permet de limiter, voire d'éviter, une ovalisation ou une déformation du premier trou et du second trou à travers le bras tubulaire.

Le premier palier et le second palier peuvent chacun comprendre une collerette faisant saillie d'une partie du fût respectif qui est située à l'extérieur du bras tubulaire, le bras tubulaire étant serré, dans la direction transversale, entre la collerette du premier palier et la collerette du second palier. Le premier palier et le second palier peuvent chacun comprendre une patte d'accrochage solidaire de la collerette respective. La patte d'accrochage du premier palier et la patte d'accrochage du second palier peuvent être disposées en vis-à-vis l'une de l'autre dans la direction transversale. La patte d'accrochage du premier palier peut être fixée à la patte d'accrochage du second palier, notamment par vissage.

Le balancier selon le deuxième aspect peut comprendre une ou plusieurs caractéristiques, prises indépendamment ou en combinaison, du balancier selon le premier aspect tel que décrit ci-avant.

Selon le deuxième aspect, il est également proposé un ensemble pour barrière de type cornadis, l'ensemble comprenant :
- un balancier tel que décrit ci-avant selon le second aspect ;
- une embase destinée à être fixée à, ou formée par, un montant délimitant un cadre d'une barrière de type cornadis, l'embase comprenant un premier flasque et un second flasque espacés l'un de l'autre dans la direction transversale, l'arbre étant relié au premier flasque et au second flasque ; et dans lequel le bras tubulaire est disposé, dans la direction transversale, entre le premier flasque et le second flasque.

L'ensemble pour barrière de type cornadis selon le deuxième aspect peut comprendre une ou plusieurs caractéristiques, prises indépendamment ou en combinaison, de l'ensemble pour barrière de type cornadis selon le premier aspect tel que décrit ci-avant.

Selon le deuxième aspect, il est également proposée une barrière de type cornadis comprenant :
- un longeron supérieur et un longeron inférieur s'étendant chacun selon une direction longitudinale ;
- un premier montant vertical et un deuxième montant vertical chacun reliés au longeron inférieur et au longeron supérieur de sorte à définir un cadre,
- un ensemble pour barrière cornadis selon le second aspect tel que décrit ci-avant,
et dans laquelle le premier flasque et le second flasque de l'embase sont solidaires du premier montant vertical.

La barrière de type cornadis selon le deuxième aspect peut comprendre une ou plusieurs caractéristiques, prises indépendamment ou en combinaison, de la barrière de type cornadis selon le premier aspect telle que décrite ci-avant.

Selon un troisième aspect, indépendant du premier aspect et du second aspect, il est proposé un balancier comprenant :
- un bras tubulaire définissant un axe d'extension, le bras tubulaire étant destiné à pivoter autour d'un premier axe transversal par rapport à une embase fixe ;
- un organe de rappel adapté pour assurer un rappel du bras tubulaire dans une première position autour du premier axe transversal, l'organe de rappel étant disposé à l'intérieur du bras tubulaire ; et
- un mécanisme d'arrêt adapté pour limiter un déplacement de l'organe de rappel à l'intérieur du bras tubulaire, au moins dans la direction de l'axe d'extension du bras tubulaire.

Le mécanisme d'arrêt permet de maintenir l'organe de rappel à l'intérieur du bras tubulaire, notamment lors de l'assemblage ou du transport du balancier.

Le mécanisme d'arrêt peut comporter :
- un premier palier fixe par rapport au bras tubulaire, le premier palier comprenant un fût tubulaire s'étendant suivant le premier axe transversal à l'intérieur du bras tubulaire,
- une cage disposée à l'intérieur du bras tubulaire dans laquelle l'organe de rappel est, en partie, reçu de manière flottante, la cage comportant un premier relief coopérant avec le fût du premier palier afin de bloquer un déplacement de la cage à l'intérieur du bras tubulaire dans un premier sens suivant l'axe d'extension du bras tubulaire.

Il est entendu par « flottante » qu'un déplacement limité de l'organe de rappel dans la cage est permis. Le premier sens suivant l'axe d'extension du bras tubulaire peut être dirigé vers une extrémité supérieure du bras tubulaire. Le fût du premier palier peut présenter une forme cylindrique de révolution autour du premier axe transversal. Le premier relief de la cage peut présenter une forme en arc de cercle autour du premier axe transversal. Le premier relief de la cage peut coopérer avec une face externe du fût du premier palier.

Le mécanisme d'arrêt peut comprendre un second palier fixe par rapport au bras tubulaire, le second palier comprenant un fût tubulaire s'étendant suivant le premier axe transversal à l'intérieur du bras tubulaire, la cage comportant un second relief coopérant avec le fût du second palier afin de bloquer un déplacement de la cage à l'intérieur du bras tubulaire dans, au moins, un second sens suivant l'axe d'extension du bras tubulaire.

L'organe de rappel est ainsi complètement encadré dans le bras tubulaire selon la direction d'extension du bras tubulaire et son déplacement suivant la direction d'extension du bras tubulaire est limité à un jeu. Le balancier peut être transporté ou manipulé sans risque de déplacer l'organe de rappel à l'intérieur du bras tubulaire ou de perdre l'organe de rappel. Il n'est toutefois pas exclu qu'il peut exister un jeu entre l'organe de rappel et l'un des fûts ou entre l'organe de rappel et chaque fût. Le second sens suivant l'axe d'extension du bras tubulaire peut être dirigé vers une extrémité inférieure du bras tubulaire. Le second relief de la cage peut coopérer avec le fût du second palier afin de bloquer un déplacement de la cage à l'intérieur du bras tubulaire dans le premier sens et dans le second sens suivant l'axe d'extension du bras tubulaire.

Le fût du second palier peut présenter une forme cylindrique de révolution autour du premier axe transversal. Le second relief de la cage peut présenter une forme circulaire autour du premier axe transversal. Le second relief de la cage peut coopérer avec une face externe du fût du second palier.

La cage peut être interposée, dans la direction transversale, entre le fût du premier palier et le fût du second palier afin de limiter un déplacement de la cage dans la direction transversale.

La cage peut présenter une première paroi latérale et une seconde paroi latérale espacées l'une de l'autre dans la direction transversale. En raison de la coopération du premier relief et du second relief respectivement avec le fût du premier palier et le fût du second palier, la cage peut être disposée dans le bras tubulaire avec la première paroi latérale et la seconde paroi disposées selon un sens unique dans la direction transversale vis-à-vis du premier palier et du second palier. Autrement dit, la cage peut être agencée avec la première paroi latérale disposée du même côté, dans la direction transversale, que le premier palier par rapport à l'axe d'extension du bras tubulaire et avec la seconde paroi latérale disposée du même côté, dans la direction transversale, que le second palier par rapport à l'axe d'extension du bras tubulaire.

Le balancier selon le troisième aspect peut comprendre une ou plusieurs caractéristiques, prises indépendamment ou en combinaison, du balancier selon le premier aspect tel que décrit ci-avant.

### Brève description des dessins

D'autres caractéristiques, détails et avantages apparaîtront à la lecture de la description détaillée ci-après, et à l'analyse des dessins annexés, sur lesquels :
Figure 1 représente une vue schématique partielle d'une barrière de type cornadis selon la présente description ;
Figure 2 est une vue à plus grande échelle de l'articulation du balancier de la barrière de la figure 1 et représente schématiquement la course du balancier ;
Figure 3 comporte une figure 3a qui représente schématiquement en coupe le balancier de la figure 1 lorsque celui-ci est dans la position d'ouverture, et une figure 3b qui représente schématiquement en coupe le balancier de la figure 1 lorsque celui-ci est dans la position de dégagement ;
Figure 4 représente schématiquement l'articulation du balancier de la figure 2 dans le plan de coupe IV-IV ;
Figure 5 comporte la figure 5a qui représente schématiquement l'articulation du balancier de la figure 2 dans le plan de coupe V-V et la figure 5b qui est une vue à plus grande échelle de la zone encerclée de la figure 5a ;
Figure 6 représente schématiquement l'organe de rappel mis en oeuvre dans l'articulation des figures 4 et 5 ;
Figure 7 comprend la figure 7a et la figure 7b qui représentent en perspective une cage mise en oeuvre dans l'articulation des figures 4 et 5 et dans laquelle est logé l'organe de rappel de la figure 6 ;
Figure 8 représente schématiquement l'arbre mis en oeuvre dans l'articulation des figures 4 et 5 ;
Figure 9 représente schématiquement la mise en place de l'organe de rappel de la figure 6 à l'intérieur du bras tubulaire du balancier.

### Description des modes de réalisation

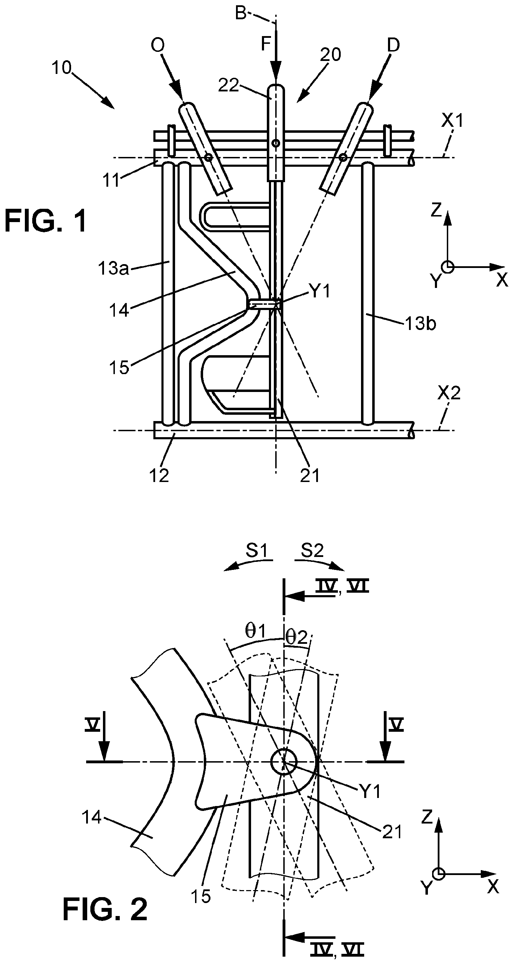

Il est maintenant fait référence aux figures 1 à 3 qui représentent partiellement une barrière 10 de type cornadis. La barrière 10 comprend tout d'abord un longeron supérieur 11 et un longeron inférieur 12 s'étendant chacun selon une direction longitudinale X. Le longeron supérieur 11 s'étend selon un premier axe longitudinal X1 et le longeron inférieur 12 s'étend selon un deuxième axe longitudinal X2. Le premier axe longitudinal X1 et le deuxième axe longitudinal X2 définissent un plan de la barrière 10.

Comme précédemment, dans la description qui suit, la direction longitudinale X s'entend de la direction dans laquelle le longeron supérieur 11 et le longeron inférieur 12 s'étendent. La direction verticale Z correspond à la direction du champ de pesanteur terrestre. La direction verticale Z est perpendiculaire à la direction longitudinale X. La direction transversale Y correspond enfin à une direction perpendiculaire à la direction longitudinale X et à la direction verticale Z. En outre, les qualificatifs de position absolue, tels que les termes « haut », « bas », etc., ou de position relative, tels que les termes « dessus », « dessous », « supérieur », « inférieur », etc., et les qualificatifs d'orientation, tels que les termes « vertical » et « horizontal » font référence à la direction verticale Z telle que définie et, sauf précision contraire, à l'orientation des figures.

La barrière 10 comprend un premier montant vertical 13a et un second montant vertical 13b s'étendant chacun dans la direction verticale Z. Les montants verticaux 13a, 13b sont chacun reliés au longeron inférieur 12 et au longeron supérieur 11. Le longeron inférieur 12, le longeron supérieur 11 et la paire de montants verticaux 13a, 13b définissent ainsi un cadre. La barrière 10 comprend par ailleurs une barre coudée 14 s'étendant dans le plan de la barrière 10 à l'intérieur du cadre. La barre coudée 14 est fixe par rapport au cadre. Une extrémité inférieure de la barre coudée 14 est ici reliée au longeron inférieur 12 et une extrémité supérieure de la barre coudée 14 est reliée au longeron supérieur 11.

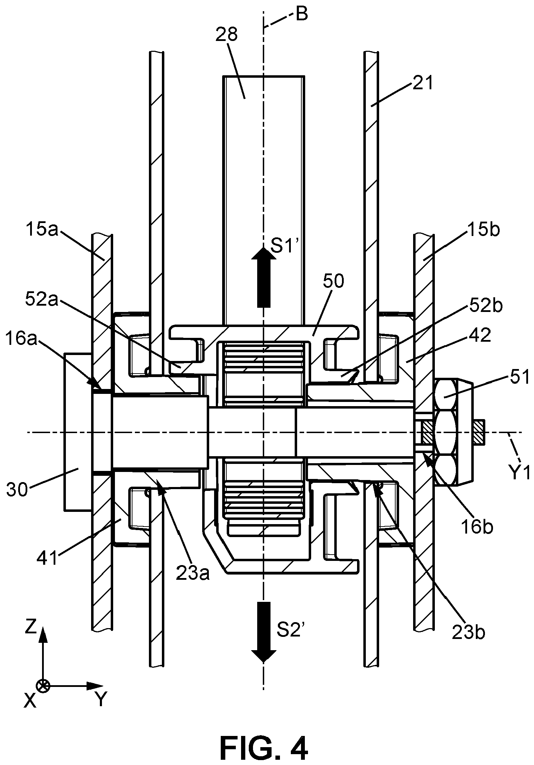

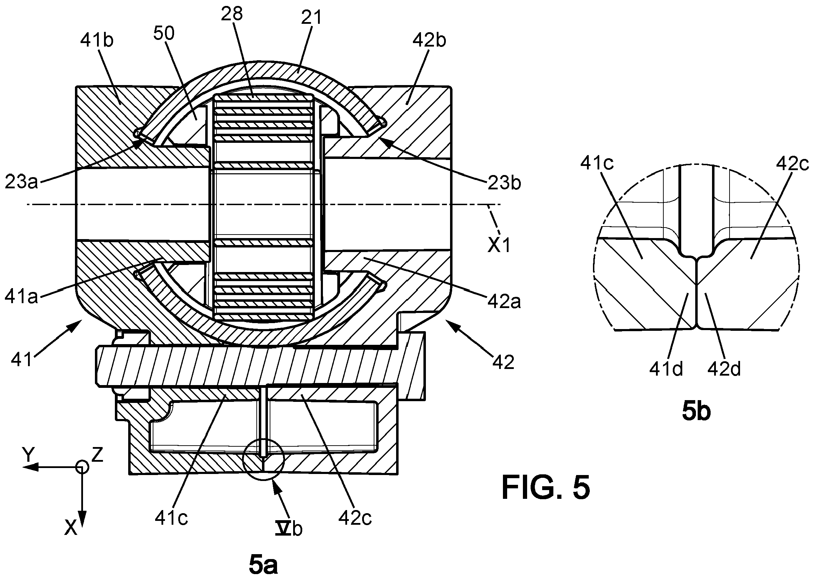

La barrière 10 comprend également un balancier 20. Le balancier 20 comporte un bras tubulaire 21 définissant un axe d'extension B. L'axe d'extension B du bras tubulaire 21 est ici contenu dans le plan de la barrière 10. En d'autres termes, l'axe d'extension B du bras tubulaire 21 est perpendiculaire à la direction transversale Y. Le bras du balancier 20 est articulé pivotant autour d'un premier axe transversal Y1 par rapport à une embase 15 qui est solidaire de la barre coudée 14. L'articulation du bras tubulaire 21 par rapport à l'embase 15 est représentée plus en détails aux figures 4 et 5.

L'embase 15 comprend ici un premier flasque 15a et un second flasque 15b qui sont solidaires de la barre coudée 14. Le premier flasque 15a et le second flasque 15b sont espacés l'un de l'autre dans la direction transversale Y. Chaque flasque 15a, 15b s'étend perpendiculairement au premier axe transversal Y1. Le bras tubulaire 21 est disposé, dans la direction transversale Y, entre le premier flasque 15a et le second flasque 15b. Un déplacement du bras tubulaire 21 dans la direction transversale Y est ainsi limité, voire empêché.

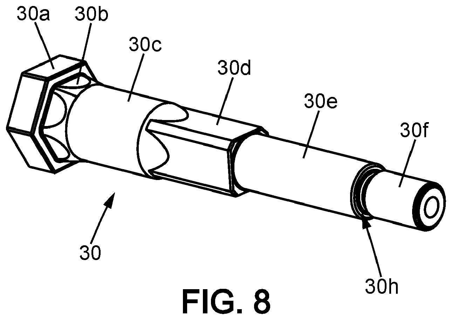

Le balancier 20 comprend un arbre 30 s'étendant suivant le premier axe transversal Y1 et autour duquel pivote le bras tubulaire 21. L'arbre 30 est relié rigidement au premier flasque 15a et au second flasque 15b. L'arbre 30 est plus particulièrement visible aux figures 4 et 8. Un tel arbre 30 constitue une solution fiable et économique pour guider le bras tubulaire 21 en rotation autour du premier axe transversal Y1 par rapport à l'embase 15.

Pour assurer le guidage en rotation du bras tubulaire 21 autour du premier axe transversal Y1, le bras tubulaire 21 présente un premier trou 23a et un second trou 23b qui sont disposés en vis-à-vis l'un de l'autre dans la direction transversale Y et à travers lesquels s'étend l'arbre 30. A cet effet, l'arbre 30 comprend une première portion de guidage 30c et une seconde portion de guidage 30e, chacune étant cylindrique de révolution autour du premier axe transversal Y1. La première portion de guidage 30c et la seconde portion de guidage 30e sont reçues respectivement, en partie, dans le premier trou 23a et le second trou 23b à travers le bras tubulaire 21.

Pour assurer la fixation de l'arbre 30 à l'embase 15, le premier flasque 15a et le second flasque 15b comportent respectivement un premier trou 16a et un second trou 16b centrés sur le premier axe transversal Y1. L'arbre 30 s'étend au travers des trous 16a, 16b formés dans les flasques 15a, 15b. De manière remarquable, le diamètre premier trou 16a à travers le premier flasque 15a est supérieur au diamètre du second trou 16b à travers le second flasque 15b. En outre, le diamètre de la première portion de guidage 30c de l'arbre 30 est supérieur au diamètre du second trou 16b à travers le second flasque 15b. On assure ainsi un sens unique d'insertion de l'arbre 30 à travers le bras tubulaire 21.

L'arbre 30 comprend également une tête 30a au niveau d'une première extrémité dans la direction transversale Y. La tête 30a présente une surface d'appui en appui, dans la direction transversale Y, avec une face externe du premier flasque 15a. La face externe du premier flasque 15a est opposée au second flasque 15b dans la direction transversale Y. Lors de l'assemblage du balancier 20, la mise en appui de la tête 30a de l'arbre 30 sur la face externe du premier flasque 15a assure le bon positionnement de l'arbre 30 selon la direction transversale Y. Comme visible à la figure 8, la tête 30a de l'arbre 30 présente un profil externe ayant une forme polygonale, ici hexagonale. Cela permet de mettre en prise la tête 30a de l'arbre 30 avec un outil adapté pour maintenir l'arbre 30 en rotation autour du premier axe transversal Y1 ou avec un outil adapté pour entrainer l'arbre 30 en rotation autour du premier axe transversal Y1. Alternativement, le profil externe de la tête peut présenter toute forme adaptée à la mise en prise avec l'outil.

L'arbre 30 comprend en outre une portion filetée 30f au niveau d'une seconde extrémité dans la direction transversale Y. La portion filetée 30f s'étend d'un côté du second flasque 15b qui est opposé au premier flasque 15a dans la direction transversale Y. Un écrou 31, préférentiellement freiné, est vissé sur la portion filetée 30f de l'arbre 30 pour être serré contre une face externe du second flasque 15b. La face externe du second flasque 15b est opposée au premier flasque 15a dans la direction transversale Y. Optionnellement, lorsque la tête 30a de l'arbre 30 est en appui sur la face externe du premier flasque 15a, il peut en outre être prévu que la portion filetée 30f de l'arbre 30 s'étende transversalement depuis la seconde extrémité de l'arbre jusqu'à une partie de l'arbre qui alignée transversalement avec la face externe du second flasque 15b. Cela permet d'éviter, voire d'empêcher, un serrage trop important de l'écrou 31 pouvant déformer les flasques 15a, 15b. Optionnellement encore, l'arbre 30 peut comprendre aussi un épaulement 30h en appui, dans la direction transversale Y, contre une face interne du second flasque 15b. La face interne du second flasque 15b est transversalement opposée à la face externe et est donc en regard du premier flasque 15a dans la direction transversale Y. Cela permet un maintien de l'écartement entre le premier flasque 15a et le second flasque 15b dans la direction transversale Y lors du serrage de l'écrou 31. Alternativement, il peut être prévu un serrage selon un couple prédéterminé en l'arbre 30 et l'écrou 31 afin d'éviter une déformation des flasques 15a, 15b.

Par ailleurs, l'arbre 30 est maintenu fixe en rotation autour du premier axe transversal Y1 par rapport à l'embase 15 par complémentarité de formes entre une portion de verrouillage 30b de l'arbre 30 et le premier trou 16a à travers le premier flasque 15a. La portion de verrouillage 30b de l'arbre 30 est reçue dans le premier trou 16a à travers le premier flasque 15a. La portion de verrouillage 30b présente une section adaptée pour coopérer avec une face interne du premier trou 16a à travers le premier flasque 15a pour solidariser en rotation l'arbre 30 par rapport au premier flasque 15a autour du premier axe transversal Y1. Comme visible à la figure 8, La portion de verrouillage 30b de l'arbre 30 présente une forme comportant des méplats.

Comme représenté à la figure 1, le balancier 20 peut pivoter entre une position d'ouverture O permettant le passage de la tête d'un animal dans une partie supérieure du cadre et une position de dégagement D permettant à l'animal d'accéder à une auge pour s'alimenter et/ou de retirer sa tête par une partie inférieure du cadre. Autrement dit, dans la position d'ouverture O, le balancier 20 est dans position telle qu'une partie inférieure du bras du balancier 20 obstrue la partie inférieure du cadre. Le passage de la tête d'un animal à travers le cadre n'est alors permis qu'au niveau de la partie supérieure du cadre, longitudinalement entre une partie supérieure du bras du balancier 20 et le second montant vertical 13b. Dans la position de dégagement D, le balancier 20 est dans position telle qu'une partie supérieure du bras du balancier 20 obstrue la partie supérieure du cadre. Le passage de la tête d'un animal à travers le cadre n'est alors permis qu'au niveau de la partie inférieure du cadre, longitudinalement entre une partie inférieure du bras du balancier 20 et le second montant vertical 13b.

Comme représenté à la figure 2, dans la position d'ouverture O, le bras tubulaire 21 est pivoté selon un angle θ1 dans un premier sens S1 autour du premier axe transversal Y1. Dans la position d'ouverture O, le bras tubulaire 21 est en butée contre une partie supérieure de la barre coudée 14. Ainsi, un pivotement du bras tubulaire 21 au-delà de la position d'ouverture O dans le premier sens S1 autour du premier axe transversal Y1 est limité. La position d'ouverture O constitue une première position d'arrêt du bras tubulaire 21. Dans la position de dégagement D, le bras tubulaire 21 est pivoté selon un angle θ2 dans un second sens S2 autour du premier axe transversal Y1. Dans la position dégagement D, le bras tubulaire 21 est en butée contre une partie inférieure de la barre coudée 14. Ainsi, un pivotement du bras tubulaire 21 au-delà de la position de dégagement D dans le second sens S2 autour du premier axe transversal Y1 est limité. La position de dégagement D constitue une seconde position d'arrêt du bras tubulaire 21.

Il peut en outre être prévu de pouvoir verrouiller le balancier 20 dans une position de fermeture F, permettant soit de refuser l'accès à travers le cadre pour un animal, soit d'entraver l'animal par l'encolure. A cet effet, le balancier 20 comprend une fourche 22 solidaire d'une extrémité supérieure du bras tubulaire 21 qui est destinée à coopérer avec un mécanisme de verrouillage. Dans la position de verrouillage, le bras du balancier 20 s'étend ici selon la direction verticale Z.

Le balancier 20 comprend également un organe de rappel adapté pour assurer un rappel du bras tubulaire 21 dans la position d'ouverture O. L'organe de rappel est ici logé dans le bras tubulaire 21. Ainsi, l'organe de rappel est protégé du milieu extérieur. Cela permet d'éviter, voire d'empêcher, un blocage de l'organe de rappel par un corps étranger. Aussi, la durée de vie d'un tel organe de rappel est améliorée. Par ailleurs, l'accès à l'organe de rappel est limité, améliorant ainsi la sécurité d'un utilisateur et/ou d'un animal.

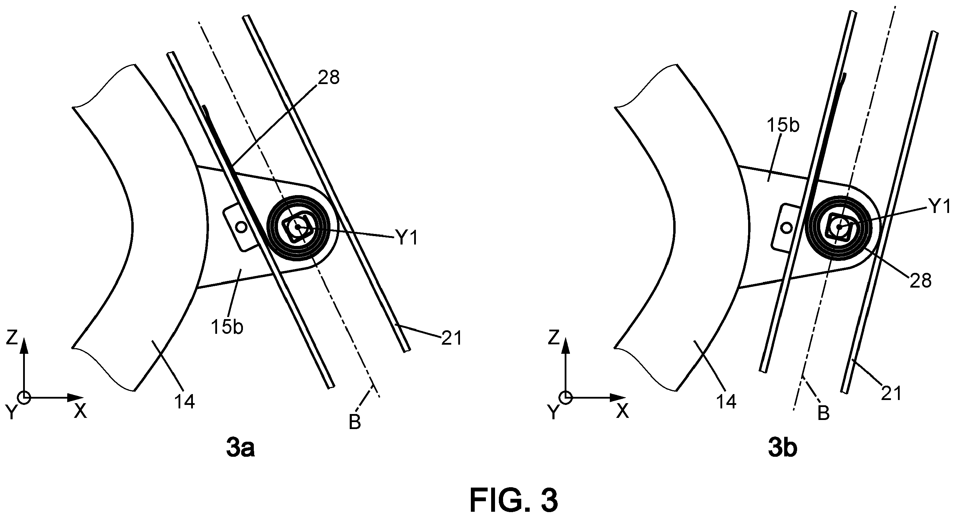

Comme représentée aux figures 3 à 6, l'organe de rappel comprend un ressort spiral 28 enroulé autour du premier axe transversal Y1. Il s'agit ici d'un ressort spiral 28 plat. Le ressort spiral 28 présente une première portion d'extrémité 28a du ressort spiral 28 qui est disposée, au moins en partie, en appui sur une face interne du bras tubulaire 21 à distance du premier axe transversal Y1 et une seconde portion d'extrémité 28b qui est montée sur l'arbre 30, fixe en rotation autour du premier axe transversal Y1. En référence à la figure 3a, lorsque le bras tubulaire 21 est dans la position d'ouverture O autour du premier axe transversal Y1, le ressort spiral 28 peut présenter une tension minimale. Lorsque le bras tubulaire 21 est pivoté dans le second sens S2 autour du premier axe transversal Y1, i.e. vers la position de dégagement D représentée à la figure 3b, le ressort est comprimé par l'action du bras tubulaire 21 sur la première portion d'extrémité 28a du ressort spiral 28. On assure un retour automatique du bras du balancer vers la position d'ouverture O autour du premier axe transversal Y1 lorsque celui n'est pas dans la position d'ouverture O et qu'aucun effort, notamment en rotation autour du premier axe transversal Y1, n'est appliqué au bras tubulaire 21. Par ailleurs, un tel ressort permet d'éviter de disposer une masse faisant office de contre-balancier et allège ainsi le balancier 20. En outre, la première portion d'extrémité 28a du ressort spiral 28 s'étend généralement de manière rectiligne. Cela permet un effet de levier plus important entre la première portion du ressort spiral 28 et une face interne du bras tubulaire 21 afin d'optimiser l'action exercée par le bras tubulaire 21 sur le ressort spiral 28.

La seconde portion d'extrémité 28b du ressort spiral 28 entoure une portion centrale 30d de l'arbre 30 qui est disposée à l'intérieur du bras tubulaire 21. La seconde portion d'extrémité 28b du ressort spiral 28 et la portion centrale 30d de l'arbre 30 sont associées par complémentarité de forme afin d'assurer un blocage en rotation autour du premier axe transversal Y1 entre la seconde portion d'extrémité 28b du ressort spiral 28 et la portion centrale 30d de l'arbre 30. Pour ce faire, la portion centrale 30d de l'arbre 30 présente dans l'exemple représenté une section de forme carrée. La section en forme de carré de la portion centrale 30d de l'arbre 30 présente avantageusement des chanfreins permettant une meilleure coopération entre l'arbre 30 et la seconde portion d'extrémité 28b du ressort spiral 28 et limitant ainsi l'usure du ressort spiral 28.

Lorsque le bras tubulaire 21 est dans la position d'ouverture O autour du premier axe transversal Y1, le ressort spiral 28 peut présenter une pré-tension, i.e. une tension non nulle. Cela permet un meilleur rappel du bras tubulaire 21 dans la position d'ouverture O autour de l'axe transversal. La pré-tension peut être appliquée au ressort spiral 28 avec l'arbre 30 disposé de sorte que la portion de verrouillage 30b de l'arbre 30 ne soit pas engagée avec la face interne du premier trou 16a à travers le premier flasque 15a de l'embase 15. L'arbre 30 peut être entrainer en rotation autour du premier axe transversal Y1 par un outil adapté pour être en prise sur la tête 30a de l'arbre afin d'engendrer la pré-tension dans le ressort spiral 28 lors de l'assemblage du balancier 20.

Le ressort spiral 28 peut être réalisé en un matériau métallique. Un ressort spiral 28 en métal présente l'avantage d'avoir des propriétés mécaniques qui sont moins altérées par, d'une part, les conditions extérieures telles que la température ou les rayonnements ultraviolets, et d'autre part, le phénomène de vieillissement, notamment en comparaison à un matériau plastique, tel que le caoutchouc par exemple.

Le balancier 20 comprend par ailleurs, un mécanisme d'arrêt adapté pour limiter un déplacement de l'organe de rappel à l'intérieur du bras tubulaire 21. Le mécanisme d'arrêt permet de maintenir l'organe de rappel à l'intérieur du bras tubulaire 21, notamment lors de l'assemblage ou du transport du balancier 20.

Le mécanisme d'arrêt comprend tout d'abord une cage 50 disposée à l'intérieur du bras tubulaire 21 dans laquelle le ressort spiral 28 est, en partie, reçu de manière flottante. En particulier, la première portion d'extrémité 28a du ressort est disposée à l'extérieur de la cage 50. La cage 50 comprend une première paroi latérale 51 a et une seconde paroi latérale 51 b qui sont espacées l'une de l'autre dans la direction transversale Y. La première paroi latérale 51 a et la seconde paroi latérale 51 b de la cage 50 présentent chacune un trou centré sur le premier axe transversal Y1 et adapté au passage de l'arbre 30. La cage 50 comprend par ailleurs un premier relief 52a en saillie de la première paroi 51a latérale dans la direction transversale Y vers l'extérieur de la cage 50 et un second relief 52b en saillie de la seconde paroi latérale 51b dans la direction transversale Y vers l'extérieur de la cage 50. Le premier relief 52a de la cage 50 présente une forme en arc de cercle autour du premier axe transversal Y1. Le second relief 52b de la cage 50 présente une forme circulaire autour du premier axe transversal Y1.

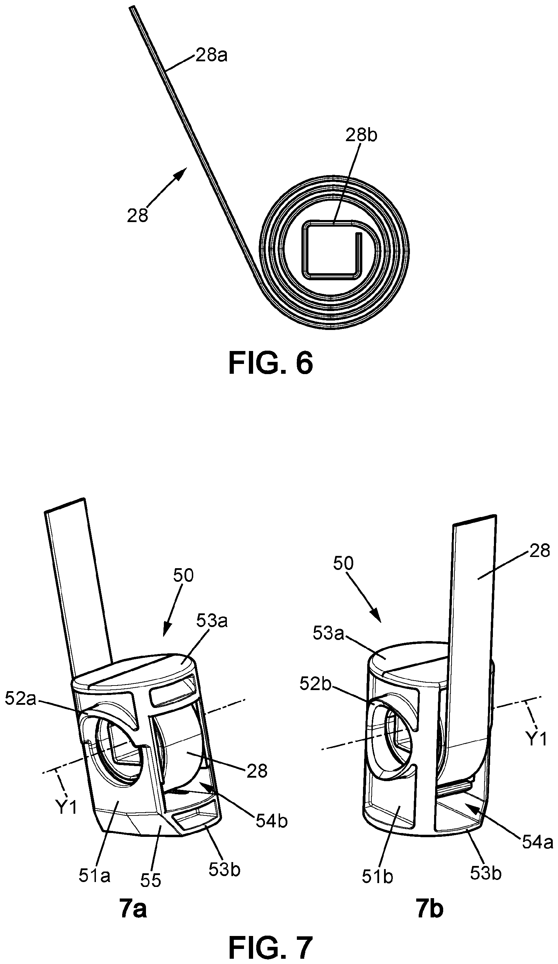

La cage comprend en outre une paroi supérieure 53a et une paroi inférieure 53b disposées respectivement au niveau d'une extrémité supérieure et d'une extrémité inférieure de la cage 50. La cage 50 comprend par ailleurs une première ouverture 54a et une seconde ouverture 54b espacées l'une de l'autre dans la direction longitudinale. Chaque ouverture 54a, 54b est délimitée, dans la direction transversale, entre la première paroi latérale 51a et la seconde paroi latérale 51b. Chaque ouverture 54a, 54b est délimitée, dans la direction de l'axe d'extension B du bras tubulaire 21, par la paroi supérieure 53a et la paroi inférieure 53b. De manière remarquable à la figure 7, seule la première ouverture 54a permet l'insertion du ressort spiral 28 à l'intérieur de la cage 50.

Le mécanisme d'arrêt comprend par ailleurs un premier palier 41 et un second palier 42. Le premier palier 41 et le second palier 42 sont fixes par rapport au bras tubulaire 21. Le premier palier 41 et le second comprennent chacun un fût 41a, 42a tubulaire d'axe le premier axe transversal Y1. Le fût tubulaire 41a, 42a de chaque palier 41, 42 est ici cylindrique de révolution autour du premier axe transversal Y1. Le fût tubulaire 41a du premier palier 41 et le fût tubulaire 42a s'étendent à l'intérieur du bras tubulaire 21 de chaque côté de la cage 50. Le premier relief 52a coopère avec une face externe du fût 41a du premier palier 41 afin de bloquer un déplacement de la cage 50 à l'intérieur du bras tubulaire 21 dans un premier sens S1' suivant l'axe d'extension B du bras tubulaire 21. Le premier sens S1' suivant l'axe d'extension B du bras tubulaire 21 est ici dirigé vers l'extrémité inférieure du bras tubulaire 21. Le second relief 52b coopère avec une face externe du fût 42a du second palier 42 afin de bloquer un déplacement de la cage 50 à l'intérieur du bras tubulaire 21 dans le premier sens S1' et dans un second sens S2' suivant l'axe d'extension B du bras tubulaire 21. Le second sens S2' suivant l'axe d'extension B du bras tubulaire 21 est ici dirigé vers l'extrémité supérieure du bras tubulaire 21. Dans l'exemple, le second relief 52b entoure le fût 42a du second palier 42. La cage 50 est également interposée, dans la direction transversale Y, entre le fût 41a du premier palier 41 et le fût 42a du second palier 42. Ainsi un déplacement de la cage 50 dans la direction transversale Y est limité.

Le ressort spiral 28 est donc complètement encadré dans le bras tubulaire 21 selon la direction d'extension du bras tubulaire 21 et son déplacement suivant la direction d'extension du bras tubulaire 21 est limité à un jeu. En outre, le ressort spiral 28 est maintenu dans le bras tubulaire 21 dans une configuration permettant l'assemblage direct du balancier 20 sur une barrière 10 de type cornadis, i.e. sans qu'il ne soit nécessaire de réaliser des opérations supplémentaires de repositionnement du ressort spiral 28 à l'intérieur du bras tubulaire 21. Par ailleurs, le balancier 20 peut être transporté ou manipulé sans risque de déplacer le ressort spiral 28 à l'intérieur du bras tubulaire 21 ou de perdre le ressort spiral 28. Il n'est toutefois pas exclu qu'il peut exister un jeu entre le ressort spiral 28 et l'un des fûts 41a, 42a ou entre le ressort spiral 28 et chaque fût 41a, 42a.

De manière à fixer le premier palier 41 et le second palier 42 au bras tubulaire 21, le fût 41a du premier palier 41 et le fût 42a du second palier 42 s'étendent transversalement au travers respectivement du premier trou 23a et du second trou 23b à travers le bras tubulaire 21 de sorte à s'étendre en partie à l'extérieur du bras tubulaire 21. Le premier palier 41 et le second palier 42 comprennent chacun une collerette 41b, 42b faisant saillie d'une partie du fût 41a, 42a respectif qui est située à l'extérieur du bras tubulaire 21, le bras tubulaire 21 étant alors serré, dans la direction transversale Y, entre la collerette 41b du premier palier 41 et la collerette 42b du second palier 42. La collerette 41b du premier palier 41 et la collerette 42b du second palier 42 présentent chacune une face d'appui en appui sur une face externe du bras tubulaire 21. La face d'appui de chaque collerette 41b, 42b définit une portion de cylindre de révolution. Ainsi, la face d'appui de chaque collerette 41b, 42b présente une forme adaptée pour épouser la face externe du bras tubulaire 21. Cela permet une meilleure solidarisation des paliers 41, 42 sur le bras tubulaire 21.

Dans l'exemple, la collerette 41b du premier palier 41 est interposée dans la direction transversale entre le premier flasque 15a de l'embase 15 et le bras tubulaire 21. De même, la collerette 42b du second palier 42 est interposée dans la direction transversale entre le second flasque 15b de l'embase 15 et le bras tubulaire 21. La collerette 41b du premier palier 41 permet de maintenir un espacement entre le bras tubulaire 21 et le premier flasque 15a de l'embase 15 et la collerette 42b du second palier 42 permet de maintenir un espacement entre le bras tubulaire 21 et le second flasque 15b de l'embase 15. Cela permet de limiter, voire d'empêcher, que le bras tubulaire 21 frappe contre l'un et/ou l'autre des flasques 15a, 15b. Le bruit émis par l'ensemble lors de son utilisation est ainsi réduit. Un tel agencement permet en outre une réduction des jeux dans la direction transversale entre le bras tubulaire 21 et chacun des flasques 15a, 15b de l'embase 15, ce qui permet d'assurer un centrage, dans la direction transversale, du longeron supérieur 11 entre une paire de branches de la fourche 22.

Le premier palier 41 et le second palier 42 sont par ailleurs fixés l'un à l'autre. Le premier palier 41 et le second palier 42 comprennent chacun une patte d'accrochage 41c, 42c solidaire de la collerette 41b, 42b respective. La patte d'accrochage 41c du premier palier 41 et la patte d'accrochage 42c du second palier 42 sont en vis-à-vis l'une de l'autre dans la direction transversale Y. La patte d'accrochage 41c du premier palier 41 est fixée à la patte d'accrochage 42c du second palier 42, ici par vissage.

En outre, comme visible à la figure 5a, la patte d'accrochage 41c du premier palier 41 est en appui, dans la direction transversale Y, sur la patte d'accrochage 42c du second palier 42. Plus particulièrement visible à la figure 5b, la patte d'accrochage 41c du premier palier 41 et la patte d'accrochage 42c du second palier 42 comprennent chacune un bossage 41d, 42d respectif. La patte d'accrochage 41c du premier palier 41 et la patte d'accrochage 42c du second palier 42 sont en appui l'une sur l'autre, dans la direction transversale, au niveau de leur bossage 41d, 42d respectif. Cela permet d'appliquer la collerette 41b, 42b de chacun des paliers 41, 42 dans la direction transversale Y sur le bras tubulaire de sorte que le bras tubulaire 21 soit serré transversalement entre la collerette 41b, 42b de chacun des paliers 41, 42.

De manière remarquable, le fût 41a du premier palier 41 et le fût 42a du second palier 42 recouvrent respectivement la première portion de guidage 30c et la seconde portion de guidage 30e de l'arbre 30. Le fût 41a du premier palier 41 est donc interposé entre une face interne du premier trou 23a à travers le bras tubulaire 21 et la première portion de guidage 30c. De même, le fût 41a du second palier 42 est interposé entre une face interne du second trou 23b à travers le bras tubulaire 21 et la seconde portion de guidage 30e. Cela permet de limiter, voire d'éviter, une ovalisation ou une déformation du premier trou 23a et du second trou 23b à travers le bras tubulaire 21.

Le premier palier 41 et le second palier 42 peuvent être chacun réalisés en matière plastique. Cela permet de diminuer le bruit produit lors de la rotation du bras tubulaire 21 et des paliers 41, 42 par rapport aux flasques 15a, 15b de l'embase 15. Aussi, cela réduit encore plus l'ovalisation du premier trou 23a et du second trou 23b à travers le bras tubulaire 21.

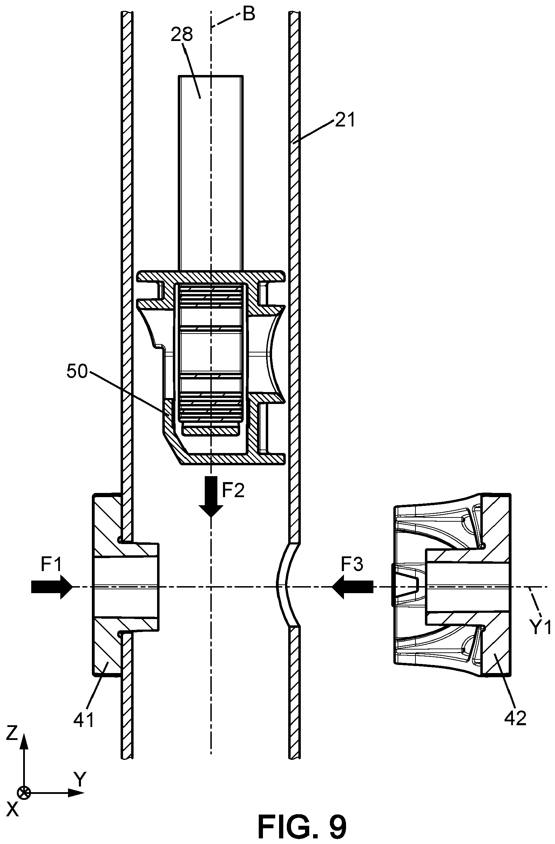

La figure 9 représente schématiquement l'assemblage de la cage 50 contenant le ressort spiral 28 à l'intérieur du bras tubulaire 21 au moyen du premier palier 41 et du second palier 42.

Le premier palier 41 est déplacé, comme illustré par la flèche F1, relativement au bras tubulaire 21 selon la direction transversale Y, de manière à insérer en partie le fût 41a du premier palier 41 à l'intérieur du bras tubulaire 21 par le premier trou 23a à travers le bras tubulaire 21. Le fût 41a du premier palier 41 est inséré à l'intérieur du bras tubulaire 21 jusqu'à ce que la face d'appui de la collerette 41b du premier palier 41 soit en appui sur le bras tubulaire 21.

La cage 50 contenant le ressort spiral 28 est ensuite déplacée, comme illustré par la flèche F2, à l'intérieur du bras tubulaire 21 selon la direction de l'axe d'extension B du bras tubulaire 21 jusqu'à ce que le premier relief 52a de la cage 50 soit en butée sur le fût 41a du premier palier 41.

La cage peut comporter un chanfrein au niveau de la jonction entre la première paroi latérale 51a et la paroi inférieure 53b. Un tel chanfrein permet d'assurer le passage d'une partie de la cage 50 entre le fût 41a du premier palier 41 et une face interne du bras tubulaire 21 jusqu'à ce que le premier relief 52a de la cage 50 soit en butée sur le fût 41a du premier palier 41.

Enfin, le second palier 42 est déplacé, comme illustré par la flèche F3, relativement au bras tubulaire 21 selon la direction transversale Y, de manière à insérer en partie le fût 42a du second palier 42 à l'intérieur du bras tubulaire 21 par le second trou 23b à travers le bras tubulaire 21. Le fût 42a du second palier 42 est inséré à l'intérieur du bras tubulaire 21 jusqu'à ce que la face d'appui de la collerette 42b du second palier 42 soit en appui sur le bras tubulaire 21 et que le second relief 52b de la cage 50 coopère avec le fût 42a du second palier 42.

Le diamètre du fût 41a du premier palier 41 est ici différent du diamètre du fût 42a du second palier 42. Cela permet d'éviter qu'un opérateur intervertisse le premier palier 41 et le second palier 42 lors de l'assemblage du balancier 20.

En raison de la coopération du premier relief 52a et du second relief 52b respectivement avec le fût 41a du premier palier 41 et le fût 42a du second palier 42, la cage 50 est disposée dans le bras tubulaire 21 avec la première paroi latérale 51a et la seconde paroi 51b disposée selon un sens unique dans la direction transversale vis-à-vis du premier palier 41 et du second palier 42. Autrement dit, la cage est agencée avec la première paroi latérale 51a qui est disposée du même côté, dans la direction transversale, que le premier palier 41 par rapport à l'axe d'extension B du bras tubulaire 21 et avec la seconde paroi latérale 51b qui est disposée du même côté, dans la direction transversale, que le second palier 42 par rapport à l'axe d'extension B du bras tubulaire 21.

Aussi, la cage 50 est adaptée pour recevoir le ressort spiral 28 uniquement dans une configuration dans laquelle le ressort spiral 28 exerce un effort de rappel sur le bras tubulaire 21 pour pivoter celui-ci dans un sens de rotation autour du premier axe transversal Y1 vers la position d'ouverture. En d'autres termes, la cage est adaptée pour recevoir le ressort spiral 28 selon un sens unique d'enroulement autour du premier axe transversal Y1 dans lequel le ressort spiral 28 exerce un effort de rappel sur le bras tubulaire 21 pour pivoter celui-ci dans un sens de rotation autour du premier axe transversal Y1 vers la position d'ouverture.

## Revendications

1. Balancier (20) adapté pour une barrière (10) de type cornadis, le balancier (20) comprenant :
- un bras tubulaire (21) définissant un axe d'extension (B), le bras tubulaire (21) étant destiné à pivoter autour d'un premier axe transversal (Y1) par rapport à une embase (15) fixe ;
- un organe de rappel adapté pour assurer un rappel du bras tubulaire (21) dans une première position (O) autour du premier axe transversal (Y1), **caractérisé en ce que** l'organe de rappel est disposé à l'intérieur du bras tubulaire (21).

2. Balancier (20) selon la revendication précédente, le balancier (20) comprenant un arbre (30) s'étendant suivant le premier axe transversal (Y1) et sur lequel est monté pivotant le bras tubulaire (21), l'arbre (30) étant destiné à être fixé rigidement à l'embase (15).

3. Balancier (20) selon la revendication précédente, dans lequel l'organe de rappel comprend un ressort spiral (28) enroulé autour du premier axe transversal (Y1), le ressort spiral (28) présentant une première portion d'extrémité (28a) qui est disposée, en tout ou partie, en appui sur une face interne du bras tubulaire (21) à distance du premier axe transversal (Y1) et une seconde portion d'extrémité (28b) qui est montée sur l'arbre (30), fixe en rotation autour du premier axe transversal (Y1).

4. Balancier (20) selon la revendication précédente, dans lequel la première portion d'extrémité (28a) du ressort spiral (28) s'étend généralement de manière rectiligne.

5. Balancier (20) selon l'une quelconque des revendications précédentes, le balancier (20) comprenant un mécanisme d'arrêt adapté pour limiter un déplacement de l'organe de rappel à l'intérieur du bras tubulaire (21), au moins dans la direction de l'axe d'extension (B) du bras tubulaire (21).

6. Balancier (20) selon la revendication précédente, la revendication 3 ou 4 s'appliquant, dans lequel le mécanisme d'arrêt comporte :
- un premier palier (41) fixe par rapport au bras tubulaire (21), le premier palier (41) comprenant un fût (41a) tubulaire s'étendant suivant le premier axe transversal (Y1) à l'intérieur du bras tubulaire (21),
- une cage (50) disposée à l'intérieur du bras tubulaire (21) dans laquelle le ressort spiral (28) est, en partie, reçu de manière flottante, la cage (50) comportant un premier relief (52a) coopérant avec le fût (41a) du premier palier (41) afin de bloquer un déplacement de la cage (50) à l'intérieur du bras tubulaire (21) dans un premier sens (S1') suivant l'axe d'extension (B) du bras tubulaire (21).

7. Balancier (20) selon la revendication précédente, dans lequel le mécanisme d'arrêt comprend un second palier (42) fixe par rapport au bras tubulaire (21), le second palier (42) comprenant un fût (42a) tubulaire s'étendant suivant le premier axe transversal (Y1) à l'intérieur du bras tubulaire (21), la cage (50) comportant un second relief (52b) coopérant avec le fût (42a) du second palier (42) afin de bloquer un déplacement de la cage (50) à l'intérieur du bras tubulaire (21) dans, au moins, un second sens (S2') suivant l'axe d'extension (B) du bras tubulaire (21).

8. Balancier (20) selon la revendication 6 ou 7, dans lequel la cage (50) est adaptée pour recevoir le ressort spiral (28) selon un sens unique d'enroulement autour du premier axe transversal (Y1) dans lequel le ressort spiral (28) exerce un effort de rappel sur le bras tubulaire (21) pour pivoter celui-ci dans un sens de rotation autour du premier axe transversal (Y1) vers la première position (O) autour du premier axe transversal (Y1).

9. Balancier (20) selon l'une quelconque des revendications 6 à 8, dans lequel chacun du premier palier (41) et du second palier (42) comprend une collerette (41b ; 42b) respective faisant saillie d'une partie du fût (41a ; 42a) respectif, ladite collerette étant située à l'extérieur du bras tubulaire (21), le bras tubulaire (21) étant serré, dans la direction transversale (Y), entre la collerette (41b) du premier palier (41) et la collerette (42b) du second palier (42).

10. Balancier (20) selon la revendication précédente, dans lequel chacun du premier palier (41) et du second palier (42) comprend une patte de d'accrochage (41c ; 42c) respective agencée à l'extérieur du bras tubulaire (21), la patte d'accrochage (41c) du premier palier (41) étant fixée à la patte d'accrochage (42c) du second palier (42).

11. Balancier (20) selon la revendication précédente, dans lequel la patte d'accrochage (41c) du premier palier (41) et la patte d'accrochage (42c) du second palier (42) comprennent chacune un bossage (41d ; 42d) respectif au niveau duquel elles sont en appui l'une sur l'autre dans la direction transversale (Y).

12. Balancier (20) selon l'une quelconque des revendications précédentes, dans lequel l'organe de rappel est réalisé en un matériau métallique.

13. Ensemble pour barrière de type cornadis, l'ensemble comprenant :
- un balancier (20) selon l'une quelconque des revendications précédentes ;
- une embase (15) destinée à être fixée à, ou formée par, un élément fixe d'une barrière (10) de type cornadis, l'embase comprenant un premier flasque (15a) et un second flasque (15b) espacés l'un de l'autre dans la direction transversale (Y), l'arbre (30) étant relié au premier flasque (15a) et au second flasque (15b) ;
et dans lequel le bras tubulaire (21) est disposé, dans la direction transversale (Y), entre le premier flasque (15a) et le second flasque (15b).

14. Barrière (10) de type cornadis comprenant :
- un longeron supérieur (11) et un longeron inférieur (12) s'étendant chacun selon une direction longitudinale (X) ;
- un premier montant vertical (13a) et un second montant vertical (13b) chacun reliés au longeron inférieur (12) et au longeron supérieur (11) de sorte à définir un cadre,
- un ensemble pour barrière cornadis selon la revendication précédente,
et dans laquelle le premier flasque (15a) et le second flasque (15b) de l'embase (15) sont fixés au cadre.
